# EUROPÄISCHE PATENTSCHRIFT

(11) **EP 3 138 680 B1**
(45) Veröffentlichungstag und Bekanntmachung des Hinweises auf die Patenterteilung: **27.05.2020**
(21) Anmeldenummer: 15002586.4
(22) Anmeldetag: 02.09.2015
(51) Int. Cl.: B29C 49/04, B29C 48/00

(54) **VERFAHREN ZUR HERSTELLUNG VON HOHLKÖRPERN BEIM BLASVERFAHREN UNTER REDUZIERTER ZYKLUSZEIT**
METHOD FOR THE PRODUCTION OF HOLLOW ARTICLES IN A BLOW-MOULDING PROCESS WITH REDUCED CYCLE TIME
PROCÉDÉ DE FABRICATION DE CORPS CREUX SELON UN PROCÉDÉ DE SOUFFLAGE À TEMPS DE CYCLE RÉDUIT

(43) Veröffentlichungstag der Anmeldung: 08.03.2017
(73) Patentinhaber: Plastron S.à.r.l., 68920 Wintzenheim (FR)
(72) Erfinder: KEILERT, Jürgen, 68920 Wintzenheim (FR); HEPPERT, Volker, 81439 Großweil (DE)
(74) Vertreter: Kuhnen & Wacker Patent- und Rechtsanwaltsbüro PartG mbB

(56) Entgegenhaltungen:
- JP-A- 2000 084 968
- JP-A- 2006 124 019
- US-A1- 2010 198 133
- DATABASE WPI Week 200480 Thomson Scientific, London, GB; AN 2004-807205 XP002754682, -& JP 2004 315559 A (TEIJIN LTD) 11. November 2004 (2004-11-11)

## Beschreibung

Die Erfindung betrifft ein Verfahren zur Herstellung von Hohlkörpern beim Blasverfahren unter reduzierter Zykluszeit und unter Einsatz eines Nukleierungsmittels, das einen thermoplastischen Kunststoff vor dem Blasumformen mit homogenverteilten Gasbläschen aufschäumend versetzt. Dazu wird zunächst ein Nukleierungsmittel, das Substanzen aufweist, welche bei einem Überschreiten einer Zersetzungstemperatur Gasbläschen emittiert, bereitgestellt. Beim Erwärmen eines Gemisches aus thermoplastischem Kunststoff und Nukleierungsmittel wird dann die Zersetzungstemperatur des Nukleierungsmittels überschritten.

Die Zykluszeiten beim Blasverfahren werden wesentlich von den Zeitspannen zum Erreichen der Zersetzungstemperatur des Nukleierungsmittels in dem Gemisch aus thermoplastischem Kunststoff und Nukleierungsmittel und der Zeitspanne zum Erreichen einer kunststoffspezifischen Erweichungs- oder Schmelztemperatur bei der sich die Gasbläschen homogen in der erweichten oder geschmolzenen Kunststoffmasse verteilen können, sowie der Abkühlzeit bis zur Entnahme des Blasteiles ohne Deformierungen, bestimmt. Die Zykluszeiten können deshalb mit den bekannten Blasformmitteln und Blasverfahren nicht wesentlich reduziert werden.

Beim Blasformen kommen in unterschiedlichen Stufen unterschiedliche Substanzen zum Einsatz. In einer ersten Stufe wird eine Nukleierungssubstanz als Nukleierungsmittel, das dem Erzeugen der Gasbläschen dient, eingesetzt. Eine zweite Stufe umfasst eine Treibsubstanz, die sich aus der Nukleierungssubstanz und Zusatzstoffen zusammensetzt, In einer dritten Stufe wird durch Mischen der Treibsubstanz mit Zusatzstoffen eine Batchsubstanz gebildet. Durch Zugabe bzw. Zumischung von Polymeranteilen zu der Batchsubstanz wird in einer vierten Stufe eine Masterbatch gebildet, die schließlich durch Zugabe bzw. Zumischung von Thermoplasten in einer fünften Stufe die Extrusionssubstanz darstellt mit der unter Druck- und Temperaturerhöhung schließlich in einer Blasformvorrichtung beispielsweise ein geschäumter Hohlkörper innerhalb einer Zykluszeit herstellbar ist.

Die Zykluszeit ist ein wesentlicher Kosten- und Wirtschaftlichkeitsfaktor bei der Herstellung geschäumter Hohlkörper.

Aus der Druckschrift EP 0 023 091 ist ein Verfahren bekannt, bei dem durch Formgebungsänderung eines Bodenbereichs eines blasgeformten Hohlkörpers die Zykluszeit der Blasformung bis zu 50 % reduziert werden kann, weil die Abkühlphase im Formwerkzeug aufgrund der Formänderung überraschenderweise verkürzt werden konnte. Allerdings wird bei diesem Blasformen auf die Nukleierung von Glasbläschen vollständig verzichtet, indem keine Nukleierungssubstanzen in der Masterbatch enthalten sind, und damit die Zykluszeit durch Einsparung der Zeitspanne zur Erreichen der Zersetzungstemperatur des Nukleierungsmittels in dem Gemisch aus thermoplastischem Kunststoff und Nukleierungsmittel zusätzlich reduziert wird. Der Nachteil dieses bekannten Verfahrens ist, dass mit einem derartigen zykluszeitreduzierten Verfahrens keine Hohlköper aus geschäumtem Thermoplast herstellbar sind, so dass sich das Endprodukt deutlich von einem erfindungsgemäßen geschäumten Hohlkörper unterscheidet.

Aus der Druckschrift WO 2012/121970 A2 ist eine Zykluszeit reduzierende Masterbatchsubstanz und ihre Verwendung in thermoplastischen Gegenständen bekannt. Die Zykluszeit wird in der WO 2012/121970 A2 zum einen dadurch reduziert, dass auf die Nukleierung von Gasbläschen verzichtet wird, indem erstens keine Nukleierungssubstanzen in der Masterbatch enthalten sind, und damit die Zykluszeit durch Einsparung der Zeitspanne zur Erreichen der Zersetzungstemperatur des Nukleierungsmittels in dem Gemisch aus thermoplastischem Kunststoff und Nukleierungsmittel reduziert wird. Zum anderen sind in der aus WO 2012/121970 A2 bekannten zyklusreduzierenden Masterbatch bis über 50 Gewichts % Füllstoffe in Form von Flugasche und pulverisierter Schlacke enthalten, die zum Beispiel von Verbrennungsmotoren ausgeschieden werden und/oder bei der Koksgewinnung entstehen, so dass die Zeitspanne zum Erreichen einer kunststoffspezifischen Erweichungs- oder Schmelztemperatur durch die drastische Verminderung der zu erweichenden bzw. zu erschmelzenden thermoplastischen Kunststoffmasse in der Masterbatch herabsetzbar ist, und damit die Zykluszeit für die Herstellung von thermoplastischen Gegenständen drastisch z.B. um 45 % gemäß WO 2012/121970 A2 reduzierbar ist. Der Nachteil dieses bekannten Verfahrens ist, dass mit einer derartigen Masterbatch keine Hohlköper aus geschäumtem Thermoplast herstellbar sind, so dass sich das Endprodukt deutlich von einem erfindungsgemäßen geschäumten Hohlkörper unterscheidet. Die bekannte zykluszeitreduzierende Masterbatchsubstanz ist somit für die Herstellung von geschämten Hohlkörpern ungeeignet.

Aus der Druckschrift US 4,152,495 ist eine geschäumte thermoplastische Kunststoffzusammensetzung bekannt, die mehrstufige polymerische Modifizierer enthält. Diese aus US 4,152,495 bekannten polymerischen Modifizierer bewirken überraschenderweise beim Extrudieren und Spritzgießen von thermoplastischen geschäumten Strukturen geringer Dichte, eine verbesserte Erscheinung, eine höhere Gleichmäßigkeit der Zellstruktur und eine reduzierte Zykluszeit. Die Reduzierung der Zykluszeit wird jedoch durch veränderte Zusätze in der Treibsubstanz erreicht, indem eine weiche polymerische Modifiziererstufe, die eine kunststoffspezifische Erweichungs- oder Schmelztemperatur unter 0°C aufweist und eine härtere polymerische Modifiziererstufe, die eine kunststoffspezifische Erweichungs- oder Schmelztemperatur von etwa 90°C als Zusatzstoff für die Treibsubstanz zugemischt wird.

Das Dokument US 2010/0198133 A1 beschreibt ein Verfahren zur Herstellung von Blasformprodukten, bei welchem Nukleierungsmittel in superkritischem Fluidzustand eingesetzt werden. Dort erfolgt allgemein eine Temperatursteuerung.

Das Dokument JP 2006 124019 A beschreibt einen geschäumten Behälter und dessen Herstellung unter Zugabe von Gas unter Druck bei Temperaturen unterhalb des Glasübergangs des verwendeten Harzes.

Das Dokument XP002754682-JP 2004 315559 A (Database WPI, Week 200480, Thomson Scientific, London, GB; AN 2004-807205) beschreibt ein Verfahren zur Herstellung eines Products aus Polycarbonat unter Verwendung eines superkritischen Kohlenstoffdioxid-Fluids, welches zusätzlich Platin enthält.

Das Dokument JP 2000 084968 A beschreibt ein Verfahren zum Hinzufügen von superkritischem Kohlenstoffdioxid zu einem geschmolzenen thermoplastischen Harz.

Aufgabe der vorliegenden Erfindung ist es, die Zykluszeit bei der Herstellung von geschäumten Kunststoffteilen weiter zu reduzieren ohne die bekannten Zusammensetzungen der Reaktionskomponenten und Substanzen stofflich zu ändern.

Diese Aufgabe wird mit dem Gegenstand des Anspruchs 1 gelöst. Vorteilhafte Weiterbildungen ergeben sich aus den abhängigen Ansprüchen.

Mit einer Ausführungsform der Erfindung wird ein Verfahren offenbart, wobei das Verfahren zur Herstellung von Hohlkörpern beim Blasverfahren unter reduzierter Zykluszeit und unter Einsatz eines Nukleierungsmittels, das einen thermoplastischen Kunststoff vor dem Blasumformen mit homogenverteilten Gasbläschen aufschäumend versetzt. Dazu wird zunächst das Nukleierungsmittel, das Substanzen aufweist, welche bei einem Überschreiten einer Zersetzungstemperatur Gasbläschen emittiert, bereitgestellt. Beim Erwärmen eines Gemisches aus thermoplastischem Kunststoff und Nukleierungsmittel wird dann die Zersetzungstemperatur des Nukleierungsmittels überschritten. Danach wird ein superkritischer Fluidzustand der entstandenen Gasbläschen mittels gegenüber Umgebungsdruck erhöhter superkritischer Druckwerte unter Fortsetzen der Erwärmung des Gemisches aufrechterhalten und eine Blasformung in einer Blasformungsvorrichtung bei den superkritischen Druckwerten des mit homogenverteilten Gasbläschen aufgeschäumten thermoplastischen Kunststoffs zu einem Hohlkörper, bei einer Erweichungs- oder Schmelztemperatur des thermoplastischen Kunststoffs, die auf unterhalb einer kunststoffspezifischen Erweichungsoder Schmelztemperatur des thermoplastischem Kunststoffs vermindert ist, ausgeführt.

Dieses Verfahren hat den Vorteil, dass die Blasformung bereits bei einer Temperatur durchgeführt werden kann, die unterhalb einer kunststoffspezifischen Erweichungs- oder Schmelztemperatur des thermoplastischen Kunststoffs liegt. Somit kann die Zeitspanne zum Erreichen einer kunststoffspezifischen Erweichungs- oder Schmelztemperatur bei der sich die Gasbläschen homogen in der erweichten oder geschmolzenen Kunststoffmasse verteilen können, deutlich verkürzt werden, ohne die für das Blasformen bekannten Zusammensetzungen der Nukleierungssubstanz als Nukleierungsmittel, das dem Erzeugen der Gasbläschen dient, die Treibsubstanz, die sich aus der Nukleierungssubstanz und Zusatzstoffen zusammensetzt, die Batchsubstanz, die durch Mischen der Treibsubstanz mit Zusatzstoffen gebildet wird, die Zusammensetzung der Masterbatch, die durch Zugabe bzw. Zumischung von Polymeranteilen zu der Batchsubstanz gebildet wird oder die Zusammensetzung der Extrusionssubstanz, die durch Zugabe bzw. Zumischung von Thermoplasten gebildet wird, ändern zu müssen. Es können somit in vorteilhafter Weise alle bekannten Rezepturen für die Zusammensetzung der zum Blasformen erforderlichen und vorteilhaften Substanzen unverändert beibehalten werden und dennoch die Zykluszeit weiterhin drastisch verkürzt werden, da durch die erfindungsgemäßen superkritischen Druckwerte beim Materialpumpen, beim Extrudieren und in den Zufuhrschläuchen zum Formwerkzeug ein superkritischer Zustand der Gasbläschen aufrechterhalten wird.

Bei Gasbläschen aus Kohlendioxid (CO₂), die bei der Zersetzung der Nukleierungssubstanz entstehen, liegen die superkritischen Druckwerte bei über 74 bar, wobei die Glasbläschen, wenn gleichzeitig Die Temperatur derselben eine superkritische Temperatur von 31 °C übersteigt einen Aggregatszustand einnehmen, der als superkritisch bezeichnet wird, wie es die einzige anhängenden Figur zeigt. Durch den erfindungsgemäßen Einsatz (bei superkritischen Druckwerten) des Nukleierungsmittels mit der geplanten kommerziellen Produktbezeichnung PLASTRONNUC lassen sich die Zykluszeiten bei Thermoplasten überraschender und für den Fachmann in nicht naheliegender Weise um bis zu 35 % gegenüber Verfahren, die mit Druckwerten unterhalb der superkritischen Druckwerte arbeiten, reduzieren.

Dazu ist es in einer weiteren Ausführungsform vorgesehen, die gesamte Blasformungsvorrichtung einschließlich einem Extruder, einer Schmelzepumpe und Schlauchzuführungen am Formwerkzeug auf einem superkritischen Druck für die Gasblasen von größer gleich 74 bar oder stetig steigendem Druck größer gleich 74 bar und bei Temperaturen größer gleich 31° C zu halten. Im Formwerkzeug selbst kann ein Unterdruck anliegen, um beim Blasverfahren die Außenflächen des zu bildenden Hohlkörpers eng an die Innenwandungen des Blasformwerkzeugs anzupressen.

Die nachfolgen Erläuterungen sind mögliche Theorien zu den Wirkungen des superkritischen Zustands der Gasbläschen des Nukleierungsmittels mit der geplanten kommerziellen Produktbezeichnung PLASTRONNUC, welche diesem unerwarteten Effekt der Zyklusreduzierung zugrunde liegen könnten, aber in keiner Weise geeignet sind, die erfinderische Tätigkeit zu beeinträchtigen.

Von dem Nukleierungsmittel mit der geplanten kommerziellen Produktbezeichnung PLASTRONNUC wird eine geringe Menge CO₂ freigesetzt, welches als superkritisches Fluid in dem strukturviskosen erweichten oder geschmolzenen Kunststoff verteilt wird. Dieses superkritische CO₂ Fluid wirkt als Gleit- oder Schmiermittel und kann damit die Scherspannungen in dem erweichten oder geschmolzenen Kunststoff herabsetzen, was zu einer scheinbaren Viskositätserniedrigung führen kann.

Neben einer einwandfreien, das heißt nicht abgenutzten und/oder oberflächenmäßig nicht korrodierten Förderschnecke eines Extrusionssystems zur einwandfreien Dispergierung des bei der teilweisen Zersetzung des Nukleierungsmittels entstehenden Gases zu homogen verteilten Gasbläschen mittels bekannter unterschiedlicher Mischkopfformen ist, wie oben ausgeführt, der Druck im Extrusionssystem von entscheidender Bedeutung, um den superkritischen CO₂ Fluidzustand zu erreichen und bis zum Einführen in ein Blasformwerkzeug beizubehalten. Nur wenn der Druck nach der Gasbildung mindestens 74 bar beträgt wird das CO₂-Gas des sich teilweise oder vollständig zersetzendes Nukleierungsmittels zum superkritischen CO₂ Fluid, und nur dieses kann sich in dem erweichten oder geschmolzenen Kunststoff homogen verteilen.

Durch die möglicherweise erfolgende Reduzierung der Scherkräfte zwischen den Kettenmolekülen, kann sich die innere Reibung drastisch reduzieren. Mit anderen Worten, kann sich in dem Maße, indem sich das Gas in dem erweichten oder geschmolzenen Kunststoff verteilt, gleichzeitig der Erweichungs- oder Schmelzpunkt des Kunststoffs reduzieren. Beispielsweise sinkt dieser bei Polystyrol auf ca. 100 °C. Bei Polyolefinen, den gebräuchlichsten Kunststoffen für das Blasverfahren, kann der von Herstellern angegebene kunststoffspezifische Erweichungs- oder Schmelzpunkt des Kunststoffs um 20 bis 25 °C sinken.

Die oben erwähnte Reduzierung der Scherkräfte kann gleichbedeutend mit einer Reduzierung der Reibungskräfte, sowohl in dem erweichten oder geschmolzenen Kunststoff als innere Reibung als auch zwischen dem erweichten oder geschmolzenen Kunststoff und den Wandungen des Extrusionssystems als äußere Reibung und somit als Reduzierung der inneren Energie des erweichten oder geschmolzenen Kunststoffs gedeutet werden. Dieses in Verbindung mit der Reduzierung des Erweichungs- oder Schmelzpunkt des Kunststoffs kann die erfindungsgemäße Reduzierung der Zykluszeit, je nach eingesetztem Thermoplast und insbesondere je nach dem spezifischen Enthalphiegehalts des Thermoplasts bewirken.

In einer Ausführungsform der Erfindung wird als Nukleierungsmittel zur Erzeugung homogenverteilter Gasbläschen ein Nukleierungsmittel verwendet, das beim Überschreiten der Zersetzungstemperatur Gasbläschen aus Kohlendioxid (CO₂) erzeugt und Bestandteile von NaHCO₃ (Natriumhydrogencarbonat) und C₆H₇NaO₇ (Mononatriumzitrat) gleichzeitig kann das Mononatriumzitrat auch als Säureträger auftreten, aufweist. Neben dem Mononatriumcitrat können als Säureträger auch andere Substanzen wie vorzugsweise Na₂H₂P₂O₇ (Dinatriumdihydrogenphosphat), C₆H₈O₇ (Zitronensäure), KC₄H₅O₆ (Kaliumhydrogentartrat), oder Ca(H₂PO₄) (Calziumdihydrogenphosphat) eingesetzt werden.

Das Natriumhydrogencarbonat des Nukleierungsmittels kann durch andere Substanzen, die beim Überschreiten der Zersetzungstemperatur CO₂-abspalten ersetzt werden, vorzugsweise) KHCO₃ (Kaliumhydrogenkarbonat), (NH₄)HCO₃ (Ammoniumhydrogenkarbonat) oder Zitronensäure (C₆H₈O₇) oder seiner Derivate Trinatriumzitrat oder Monokalziumzitrat.

In einer weiteren Ausführungsform der Erfindung können als Nukleierungsmittel zur Erzeugung homogenverteilter Gasbläschen organische Substanzen verwendet werden, die beim Überschreiten der Zersetzungstemperatur Gasbläschen erzeugen und vorzugsweise Azodicarbonamide aufweisen, deren Zersetzungstemperatur durch Beschleuniger - sogenannte Kicker - auf unter 200°C herabgesetzt werden können.

Besonders vorteilhaft wird als physikalisches Nukleierungsmittel Ca₂CO₃ (Kalziumkarbonat) und Talkum eingesetzt, wobei Kalziumkarbonat aufgrund seiner kubischen Kristallstruktur bevorzugt wird, da sich damit gleichförmigere Gasbläschen erzeugen lassen. Auch weitere anorganische Substanzen mit entsprechender Feinheit und geringer Partikelgröße können als physikalisches Nukleierungsmittel eingesetzt werden. Vorteilhaft lassen sich auch organische Substanzen solange deren Zersetzungstemperatur beim Mischprozess unterschritten bleibt, einsetzen. Vorzugsweise können feingemahlene Karbonsäuren verwendet werden.

Zur Erzielung einer perfekten Dispergierung der Gasbläschen in dem erweichten oder geschmolzenen Kunststoff ist die mittlere Korngröße der eingesetzten Substanzen von ausschlaggebender Bedeutung. Für die Aktivsubstanzen, wie Treibsubstanz und Batchsubstanz in der Masterbatch liegt die optimale mittlere Korngröße zwischen 15 µm ≤ k ≤ 45 µm. Davon sollte die untere Grenze idealerweise bei 15 µm eingehalten und nicht unterschritten werden, um Staubexplosionen zu vermeiden und die obere Grenze von 45 µm aufgrund sich verschlechternder Durchmischungsbedingungen nicht überschritten werden. Die mittlere Partikelgröße einer physikalischen Nukleierungssubstanz sollte mindestens eine Zehnerpotenz unter der mittleren Partikelgröße der Aktivsubstanzen, vorzugsweise unter 0,05 µm liegen.

Als Trägersubstanz für die Masterbatch kann in vorteilhafter Weise ein LD-Polyethylen (Low Density Polyethylene) mit einem MFI von 10 bis 250 eingesetzt werden. Andererseits ist es auch möglich, Polyolefinwachse, sowohl auf Polyethylen- als auch auf Polypropylenbasis einzusetzen. Diese Träger lassen sich in vorteilhafter Weise problemlos für alle Thermoplaste einschließlich Polyamide verwenden. Bei Polyestern können hingegen in vorteilhafter Weise aromatische, aliphatische Copolyester mit niedrigem Erweichungs- oder Schmelzpunkt, wie zum Beispiel Technipol 061 E der Firma SIPOL eingesetzt werden. Für Azodicarbonamide können schließlich vorteilhaft niedrigschmelzende Ethylvinylacetate als Trägersubstanz in der Masterbatch vorgesehen werden.

Der vorzusehende Gasgehalt in der Masterbatch bzw. der Extrusionssubstanz hängt im Wesentlichen von dem Gasaufnahmevermögen des Thermoplastes ab. In einer praktisch erprobten Ausführungsform kann eine Gasmenge pro Kunststoffmasse von 0,1 ml/g bis 0,2 ml/g für eine optimale und homogene Dispergierung der Gasblasen vorgesehen werden. Größere Gasmengen pro Kunststoffmasse als 0,2 ml/g verteilen sich nicht mehr homogen in der erweichten oder geschmolzenen Kunststoffmasse und wirken der erfindungswesentlichen Bildung des überkritischen Fluidzustands der CO₂-Gasbläschen entgegen.

Die Extruder und Düsentemperaturen hängen von den zu verarbeitenden Thermoplasten in der Extrudersubstanz ab. Die von den Herstellern empfohlenen kunststoffspezifischen Erweichungsoder Schmelztemperaturen können bei Anwendung des erfindungsgemäßen Verfahrens um mindestens 20 °C reduziert werden, da das in der erweichten oder geschmolzenen Kunststoffmasse verteilte Gas, CO₂ oder N₂ in ihrem superkritischen Aggregatszustand reduzieren. Bei Polystyrol kann zum Beispiel die Erweichungs- oder Schmelztemperatur bei Anwendung des erfindungsgemäßen Verfahrens um bis zu 80 °C abgesenkt werden, womit eine deutliche Reduzierung der Zykluszeit verbunden ist.

Ein weiterer unverzichtbarer Bestandteil der Formulierung ist ein sogenanntes inneres Gleitmittel, welches ebenfalls die Reibung zwischen den Molekülketten reduziert und gleichzeitig die Bildung der einwandfreien Kugelform der Gasbläschen durch die Reduzierung der "inneren" Oberflächenspannung verbessert, wodurch auch die Dispergierung drastisch verbessert werden kann. Bevorzugt wird dazu in einer weiteren Ausführungsform der Erfindung ein Additiv, das auch eine antistatische Wirkung zeigt, eingesetzt, bei der dem Nukleierungsmittel ein Treibmittel für die Herstellung von geschäumten Hohlkörpern im Blasverfahren zugemischt wird, das als Antistatikum ethoxylierte Amine und/oder Alkylsulfonate umfasst und wobei das ethoxylierte Amin vorzugsweise folgende Formel als Antistatikum aufweist: 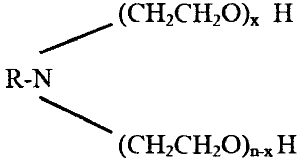 wobei R ein Alkyl-Radikal mit vorzugsweise 10 bis 18 Kohlenstoffatomen und n der Gesamt-Molanzahl von Ethylenoxid entspricht, und wobei n vorzugsweise 2 bis 15 Mol entspricht.

Dieses Antistatikum wirkt sich sehr positiv bei der Dosierung des Nukleierungsmittels aus, welches bevorzugt als Granulat eingesetzt wird, da aufgrund der Wirkung des Antistatikums kein Nukleierungsmittel an Wänden von Dosiereinheiten für die oben aufgeführten unterschiedlichen Substanzen und Zusatzstoffe und in einem Eingangsbereich einer Granulatzuführung hängen bleibt. Diese Ausführungsform einer Treibsubstanz mit Antistatikum hat darüber hinaus den Vorteil, dass auch bei der Verarbeitung von Polyvinylchlorid und Styrolen die Einsatzmengen des Antistatikums gering gehalten werden können, so dass kein dauerhaftes antistatisches Verhalten im Endprodukt erzeugt wird, sondern dass die Anhaftungen des Masterbatches insbesondere an den Wandungen der Dosierungen, in den Rohrleitungen und insbesondere beim Mischen des Masterbatches mit dem Polymer verhindert werden.

In einer weiteren Ausführungsform der Erfindung umfasst das Antistatikum einen Fettsäuereester, vorzugsweise ein Glycerol-Mono-Stearat oder ein Glycerol Stearat, besonders bevorzugt ein Glycerol-Mono-Stearat. Fettsäureester sind als Antistatikum insbesondere für die Herstellung von Kunststoffen auf Polyethylen oder Polypropylen geeignet. Die Verwendung von einem Glycerol-Mono-Stearat verhindert aber nicht nur zuverlässig eine statische Aufladung des Masterbatches sondern führt zu einer Verbesserung der Zellstruktur im Endprodukt, was auf Grund der rauweichen Oberfläche zu einer besseren Haptik führt.

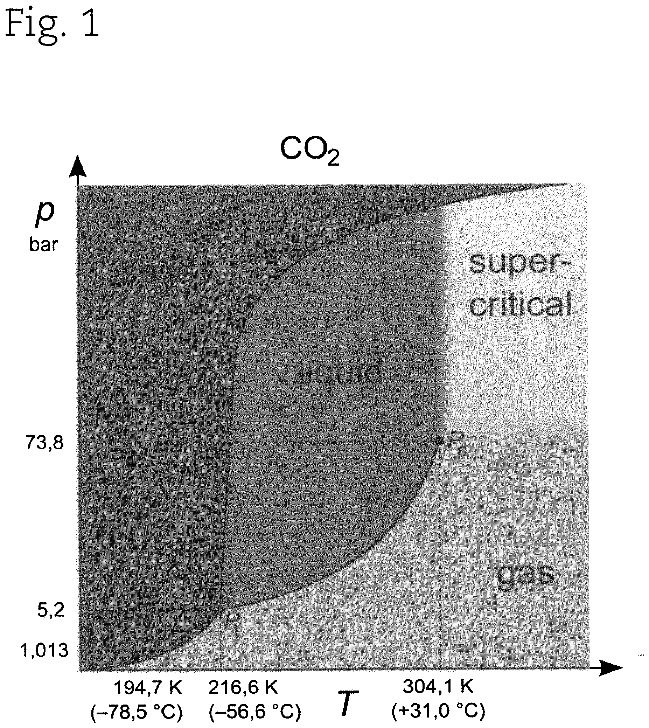

Die Erfindung wird nun anhand einer einzigen beigefügten Figur näher erläutert. Die einzige anhängende Figur 1 zeigt schematisch ein Diagramm der Aggregatszustände der CO₂-Gasbläschen, die beim Überschreiten der Zersetzungstemperatur der Nukleierungssubstanz entstehen. Dazu ist auf der Abszisse die Temperatur T in °K von 0 °K bis etwa 370 °K und an charakteristischen Punkten zusätzlich in °C aufgetragen. Die Ordinate zeigt den Druck P in bar von 1,013 bar bis etwa 100 bar. Ein erster charakteristischer Punkt bei dem alle drei klassischen Aggregatszustände, gasförmig, flüssig und fest im Aggregatszustandsdiagramm der CO₂-Gasbläschen auftreten können wird bei minus 56,6 °C und einem Druck von 5,2 bar erreicht.

Ein zweiter charakteristischer Punkt bei dem drei weitere Aggregatszustände aufeinander treffen und den die Erfindung nutzt, um die Zykluszeit des erfindungsgemäßen Blasverfahrens zu reduzieren, liegt bei 31 °C und einem kritischen Druckwert von 73,8 bar, aufgerundet 74 bar. An diesem charakteristischen Punkt treten ein flüssiger und ein gasförmiger Aggregatszustand auf die bei Überschreiten des superkritischen Druckwertes von 74 bar und bei Überschreiten des superkritischen Temperaturwertes von 31 °C in einen superkritischen Aggregatszustand eines superkritischen Fluids übergeht. Dieser superkritische Aggregatszustand wird erfindungsgemäß eingesetzt, um die für den Fachmann nicht vorhersehbaren überraschenden Wirkungen auf die Zykluszeit bei unveränderten Zusammensetzungen der Substanzen des Blasverfahrens zu verifizieren.

## Patentansprüche

1. Verfahren zur Herstellung von Hohlkörpern beim Blasverfahren unter reduzierter Zykluszeit und unter Einsatz eines Nukleierungsmittels, das einen thermoplastischen Kunststoff vor dem Blasumformen mit homogenverteilten Gasbläschen aufschäumend versetzt, wobei das Verfahren folgende Verfahrensschritte aufweist:
- Bereitstellen des Nukleierungsmittels, das Substanzen aufweist, welche bei einem Überschreiten einer Zersetzungstemperatur Gasbläschen emittieren;
- Überschreiten der Zersetzungstemperatur des Nukleierungsmittels beim Erwärmen eines Gemisches aus thermoplastischem Kunststoff und Nukleierungsmittel;
**dadurch gekennzeichnet, dass**
ein superkritischer Fluidzustand der entstandenen Gasbläschen mittels gegenüber Umgebungsdruck erhöhter superkritischer Druckwerte unter Fortsetzen der Erwärmung des Gemisches aufrechterhalten wird und eine Blasformung in einer Blasformungsvorrichtung bei den superkritischen Druckwerten des mit homogenverteilten Gasbläschen aufgeschäumten thermoplastischen Kunststoffs zu einem Hohlkörper, bei einer Umgebungstemperatur des thermoplastischen Kunststoffs, die auf unterhalb einer kunststoffspezifischen Erweichungs- oder Schmelztemperatur des thermoplastischem Kunststoffs vermindert ist, ausgeführt wird.

2. Verfahren nach Anspruch 1, wobei als Nukleierungsmittel zur Erzeugung homogenverteilter Gasbläschen ein Nukleierungsmittel verwendet wird, das beim Überschreiten der Zersetzungstemperatur Gasbläschen aus Kohlendioxid (CO₂) erzeugt und Bestandteile von Na₂CO₃ (Natriumcarbonat) und C₆H₇NaO₇ sowie Mononatriumcitrate aufweist.

3. Verfahren nach Anspruch 1, wobei als Nukleierungsmittel zur Erzeugung homogenverteilter Gasbläschen ein Nukleierungsmittel verwendet wird, das beim Überschreiten der Zersetzungstemperatur Gasbläschen erzeugt und Natriumhydrogencarbonat, Kaliumcarbonat oder Ammoniumcarbonat aufweist.

4. Verfahren nach Anspruch 1, wobei das Nukleierungsmittel als Säureträger neben dem Mononatriumcitrat C₆H₇NaO₇, Na₂H₂P₂O₇ (Di-natriumdihydrogenphosphat), C₆H₈O₇ (Zitronensäure), KC₄H₅O₆ (Kaliumhydrogentartrat) oder CaHPO₄ (Calciumhydrogenphosphat) aufweist.

5. Verfahren nach Anspruch 1, wobei als Nukleierungsmittel zur Erzeugung homogenverteilter Gasbläschen organische Substanzen verwendet werden, die beim Überschreiten der Zersetzungstemperatur Gasbläschen erzeugen und vorzugsweise organische Substanzen wie Azodicarbonamide aufweisen, deren Zersetzungstemperatur durch Beschleuniger herabgesetzt wird.

6. Verfahren nach einem der vorhergehenden Ansprüche, wobei das Nukleierungsmittel einem Treibmittel für die Herstellung von geschäumten Hohlkörpern im Blasverfahren zugemischt wird, das einen Fettsäuereester, vorzugsweise ein Glycerol-Mono-Stearat oder ein Glycerol Stearat, besonders bevorzugt ein Glycerol-Mono-Stearat als Antistatikmittel enthält.

7. Verfahren nach einem der vorhergehenden Ansprüche, wobei das Nukleierungsmittel einem Treibmittel für die Herstellung von geschäumten Hohlkörpern im Blasverfahren zugemischt wird, das als Antistatikum ethoxylierte Amine und/oder Alkylsulfonate umfasst und wobei das ethoxylierte Amin vorzugsweise folgende Formel als Antistatikum aufweist: 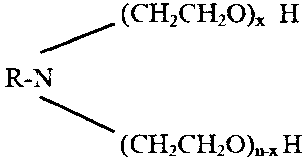 wobei R ein Alkyl-Radikal mit vorzugsweise 10 bis 18 Kohlenstoffatomen und n der Gesamt-Molanzahl von Ethylenoxid entspricht, wobei n vorzugsweise 2 bis 15 Mol entspricht.

8. Verfahren nach einem der vorhergehenden Ansprüche, wobei die gesamte Blasformungsvorrichtung einschließlich einem Extruder, einer Schmelzepumpe und Schlauchzuführungen am Formwerkzeug auf einem superkritischen Druck für die Gasblasen von größer gleich 74 bar oder stetig steigendem Druck größer gleich 74 bar und bei superkritischen Temperaturen größer gleich 31° C gehalten wird.

9. Verfahren nach einem der vorhergehenden Ansprüche, wobei die mittlere Partikelgröße einer physikalischen Nukleierungssubstanz unter 0,05 µm liegt, und wobei die mittlere Partikelgröße von Aktivkomponenten wie einer Batchsubstanz und einer Masterbatchsubstanz zwischen 15 µm ≤ k ≤ 45 µm liegt.

10. Verfahren nach einem der vorhergehenden Ansprüche, wobei für eine optimale und homogene Dispergierung der Gasblasen eine Gasmenge pro Kunststoffmasse von 0,1 ml/g bis 0,2 ml/g vorgesehen wird.

## Claims

1. A method for producing hollow articles in response to the blow molding process with reduced cycle time and by using a nucleation agent, which foams a thermoplastic plastic with homogenously distributed gas bubbles prior to the blow forming, wherein the method has the following method steps:
- providing the nucleation agent, which has substances, which emit gas bubbles when a decomposition temperature is exceeded;
- exceeding the decomposition temperature of the nucleation agent when heating a mixture of thermoplastic plastic and nucleation agent;
**characterized in that**
a supercritical fluid state of the resulting gas bubbles is maintained by means of supercritical pressure values, which are elevated as compared to ambient pressure values, while continuing heating of the mixture, and a blow molding into a hollow article is carried out in a blow molding device at the supercritical pressure values of the thermoplastic plastic, which has been foamed with homogenously distributed gas bubbles, at an ambient temperature of the thermoplastic plastic, which is reduced to below a plastic-specified softening or melting temperature of the thermoplastic plastic.

2. The method according to claim 1, wherein as nucleation agent for generating homogenously distributed gas bubbles, a nucleation agent is used, which generates gas bubbles of carbon dioxide (CO₂) when the decomposition temperature is exceeded, and which has constituents of Na₂CO₃ (sodium carbonate) and C₆H₇NaO₇ as well as monosodium citrates.

3. The method according to claim 1, wherein as nucleation agent for generating homogenously distributed gas bubbles, a nucleation agent is used, which generates gas bubbles when the decomposition temperature is exceeded, and which has sodium hydrogen carbonate, potassium carbonate or ammonium carbonate.

4. The method according to claim 1, wherein, in addition to the monosodium citrate C₆H₇NaO₇, the nucleation agent has Na₂H₂P₂O₇ (disodium hydrogen phosphate), C₆H₈O₇ (citric acid), KC₄H₅O₆ (potassium hydrogen tartrate) or CaHPO₄ (calcium hydrogen phosphate) as acid carrier.

5. The method according to claim 1, wherein as nucleation agent for generating homogenously distributed gas bubbles, organic substances are used, which generate gas bubbles when exceeding the decomposition temperature and which preferably have organic substances, such as azodicarbonamides, the decomposition temperature of which is reduced by accelerators.

6. The method according to any one of the preceding claims, wherein the nucleation agent is admixed to a blowing agent, which includes a fatty acid ester, preferably a glycerol monostearate or a glycerol stearate, particularly preferably a glycerol monostearate as antistatic agent, for the production of foamed hollow articles in the blow molding process.

7. The method according to any one of the preceding claims, wherein the nucleation agent is admixed to a blowing agent, which comprises ethoxylated amines and/or alkyl sulfonates as antistatic agent, for the production of foamed hollow articles in the blow molding process, and wherein the ethoxylated amine preferably has the following formula as antistatic agent: 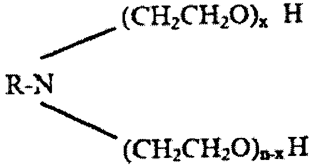 wherein R corresponds to an alkyl radical with preferably 10 to 18 carbon atoms, and n corresponds to the total number of moles of ethylene oxide, wherein n preferably corresponds to 2 to 15 moles.

8. The method according to any one of the preceding claims, wherein the entire blow molding device, including an extruder, a melt pump, and hose feeds at the mold is kept at a supercritical pressure for the gas bubbles of greater than or equal to 74 bar or steadily increasing pressure of greater than or equal to 74 bar and at supercritical temperatures of greater than or equal to 31°C.

9. The method according to any one of the preceding claims, wherein the average particle size of a physical nucleation substance lies below 0.05 µm, and wherein the average particle size of active components, such as a batch substance and a master batch substance, is between 15 µm ≤ k ≤ 45 µm.

10. The method according to any one of the preceding claims, wherein a gas quantity per plastic mass of 0.1 ml/g to 0.2 ml/g is provided for an optimal and homogenous dispersion of the gas bubbles.

## Revendications

1. Procédé de fabrication de corps creux lors du procédé de soufflage avec durée de cycle réduite et avec utilisation d'un agent nucléant qui transforme de manière moussante un plastique thermoplastique avant la déformation par soufflage avec des bulles gazeuses réparties de manière homogène, dans lequel le procédé présente les étapes de procédé suivantes :
- mise à disposition de l'agent nucléant qui présente des substances qui émettent des bulles gazeuses lors d'un dépassement d'une température de décomposition ;
- dépassement de la température de décomposition de l'agent nucléant lors du chauffage d'un mélange de plastique thermoplastique et d'agent nucléant ;
**caractérisé en ce que**
un état de fluide supercritique des bulles gazeuses apparues est maintenu au moyen de valeurs de pression supercritiques augmentées par rapport à la pression ambiante en continuant le chauffage du mélange et un moulage par soufflage est réalisé dans un dispositif de moulage par soufflage aux valeurs de pression supercritiques du plastique thermoplastique moussé avec des bulles gazeuses réparties de manière homogène en un corps creux à une température ambiante du plastique thermoplastique qui est réduite à en dessous d'une température de ramollissement ou de fusion spécifique au plastique du plastique thermoplastique.

2. Procédé selon la revendication 1, dans lequel un agent nucléant qui génère des bulles gazeuses de dioxyde de carbone (CO₂) lors du dépassement de la température de décomposition et présente des constituants de Na₂CO₃ (carbonate de sodium) et C₆H₇NaO₇ ainsi que des citrates monosodiques est utilisé en tant qu'agent nucléant pour la génération de bulles gazeuses réparties de manière homogène.

3. Procédé selon la revendication 1, dans lequel un agent nucléant qui génère des bulles gazeuses lors du dépassement de la température de décomposition et présente de l'hydrogénocarbonate de sodium, du carbonate de potassium ou du carbonate d'ammonium est utilisé en tant qu'agent nucléant pour la génération de bulles gazeuses réparties de manière homogène.

4. Procédé selon la revendication 1, dans lequel l'agent nucléant présente en tant que porteur d'acide, outre le citrate monosodique C₆H₇NaO₇, Na₂H₂P₂O₇ (dihydrogénophosphate disodique), C₆H₈O₇ (acide citrique), KC₄H₅O₆ (hydrogénotartrate de potassium) ou CaHPO₄ (hydrogénophosphate de calcium).

5. Procédé selon la revendication 1, dans lequel des substances organiques qui génèrent des bulles gazeuses lors du dépassement de la température de décomposition et présentent de préférence des substances organiques comme des azodicarbonamides dont la température de décomposition est abaissée par des accélérateurs sont utilisées en tant qu'agent nucléant pour la génération de bulles gazeuses réparties de manière homogène.

6. Procédé selon une des revendications précédentes, dans lequel l'agent nucléant est mélangé à un agent moussant pour la fabrication de corps creux moussés dans le procédé de soufflage qui contient un ester d'acide gras, de préférence un monostéarate de glycérol ou un stéarate de glycérol, de manière particulièrement préférée un monostéarate de glycérol en tant qu'agent antistatique.

7. Procédé selon une des revendications précédentes, dans lequel l'agent nucléant est mélangé à un agent moussant pour la fabrication de corps creux moussés dans le procédé de soufflage qui comprend en tant qu'antistatique des amines éthoxylées et/ou alkylsulfonates et dans lequel l'amine éthoxylée présente de préférence la formule suivante en tant qu'antistatique : 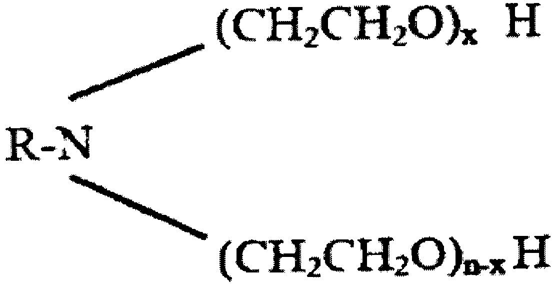 dans laquelle R est un radical alkyle avec de préférence 10 à 18 atomes de carbone et n correspond au nombre molaire total de l'oxyde d'éthylène, dans laquelle n correspond de préférence à 2 à 15 moles.

8. Procédé selon une des revendications précédentes, dans lequel le dispositif de moulage par soufflage entier y compris une extrudeuse, une pompe à masse fondue et des amenées de tuyau sur l'outil de moulage est maintenu à une pression supercritique pour les bulles gazeuses supérieure ou égale à 74 bars ou pression à croissance constante supérieure ou égale à 74 bars et à des températures supercritiques supérieures ou égales à 31°C.

9. Procédé selon une des revendications précédentes, dans lequel la taille particulaire moyenne d'une substance nucléante physique se situe en dessous de 0,05 µm, et dans lequel la taille particulaire moyenne de composants actifs comme une substance de charge et une substance de mélange maître se situe entre 15 µm ≤ k ≤ 45 µm.

10. Procédé selon une des revendications précédentes, dans lequel une quantité de gaz par masse de plastique de 0,1 ml/g à 0,2 ml/g est prévue pour une dispersion optimale et homogène des bulles gazeuses.
